Europäisches Patentamt

European Patent Office

Office européen des brevets

(19)

(11) Publication number: **0 132 415**
**B1**

(12) **EUROPEAN PATENT SPECIFICATION**

(45) Date of publication of patent specification: **02.11.88**

(51) Int. Cl.⁴: **B 41 J 3/12**

(21) Application number: **84305069.1**

(22) Date of filing: **25.07.84**

(54) **Printing system for a dot printer.**

(30) Priority: **26.07.83 JP 135228/83
21.09.83 JP 173163/83**

(43) Date of publication of application:
**30.01.85 Bulletin 85/05**

(45) Publication of the grant of the patent:
**02.11.88 Bulletin 88/44**

(84) Designated Contracting States:
**DE FR GB**

(56) References cited:
**GB-A-2 033 844
GB-A-2 105 887
US-A-4 431 319**

(73) Proprietor: **Oki Electric Industry Company,
Limited
7-12, Toranomon 1-chome Minato-ku
Tokyo 105 (JP)**

(72) Inventor: **Takano, Hirokuni c/o Oki Electric Ind.
Co. Ltd
7-12 Toranomon 1-chome
Minato-ku Tokyo (JP)**
Inventor: **Shimizu, Tadao c/o Oki Electric Ind.
Co. Ltd
7-12 Toranomon 1-chome
Minato-ku Tokyo (JP)**
Inventor: **Izaki, Osamu c/o Oki Electric Ind. Co.
Ltd
7-12 Toranomon 1-chome
Minato-ku Tokyo (JP)**

(74) Representative: **Corin, Christopher John et al
Mathisen Macara & Co. The Coach House 6-8
Swakeleys Road
Ickenham Uxbridge UB10 8BZ (GB)**

Courier Press, Leamington Spa, England.

## Description

The present invention relates to a printing method and apparatus for performing high-grade printing in a dot printer in which letters or symbols are printed by aggregated dots.

The conventional high-grade printing method as used in dot printers will now be described with reference to the accompanying drawings.

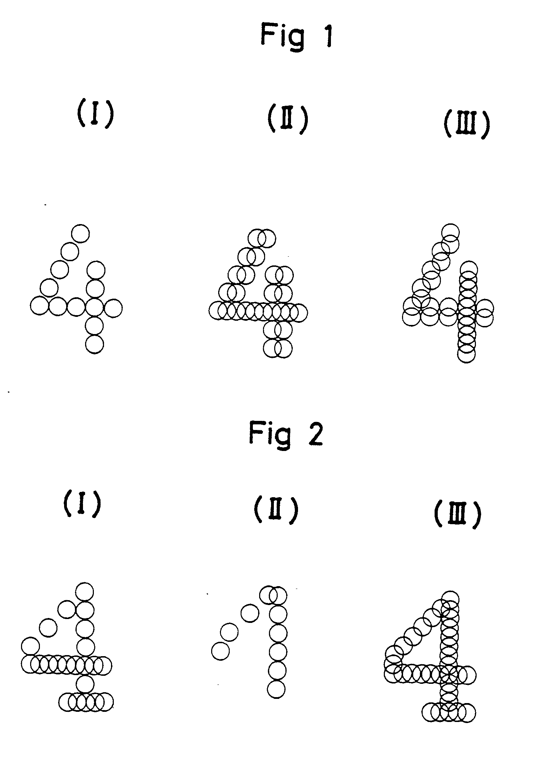

Figs. 1—(I) shows a basic dot pattern, and Figs. 1—(II) and 1—(III) show a high-grade printing pattern. Figs. 2—(I) and 2—(II) show two different printing patterns, and Fig. 2—(III) shows the high-grade printing pattern. In the drawings, numeral 4 is used as an example of the pattern.

In a first conventional method the number of wires of a printing head is increased and dots are arranged in zigzags to form a high-density dot arrangement. This method is defective in that, though the required high-grade printing can be attained, the structure and control of the apparatus are complicated and the apparatus is expensive.

In a second method a basic pattern as shown in Fig. 1—(I) is slightly shifted in the horizontal direction as shown in Fig. 1—(II) and printing is then carried out again. Alternatively the basic pattern is slightly shifted in the vertical direction as shown in Fig. 1—(III) and printing is carried out again. In the printing system of this type, the operation is simple and the apparatus is not expensive. However, the system is defective in that the quality of printed letters is poor.

In a third method, two different patterns, such as those shown in Figs. 2—(I) and 2—(II), are slightly shifted in the vertical direction to obtain high-grade printing as shown in Fig. 2(III). This method is defective in that, since two different letter patterns are necessary, the memory capacity is increased and the apparatus is expensive.

An example of this third method is described in GB—A—2 033 844. In the printer described in that specification, the print head makes two passes across the paper in order to print each line at high resolution. During the first pass, data stored in the ROM at one set of locations is used to control the print head, whereas in the second pass, performed at a double printing speed, data from a second set of related locations is used to control the print head. Inbetween the first and second passes, the paper and print head are moved relative to one another in the vertical direction perpendicular to the direction in which the passes are made. Because of this relative vertical movement and the double printing speed performed during said second pass the dots printed during the second pass are also all offset horizontally to fill in the gaps between the dots printed in the first pass. However, this method allows only gaps to be filled up in a diagonal direction occurring e.g. in the letter "X".

The present invention starts from this prior art and is characterised in that the second matrix pattern is generated from the basic dot matrix pattern by an algorithm so that any gaps between dots in the basic dot matrix pattern are filled up by interpolation dots of the second dot matrix pattern.

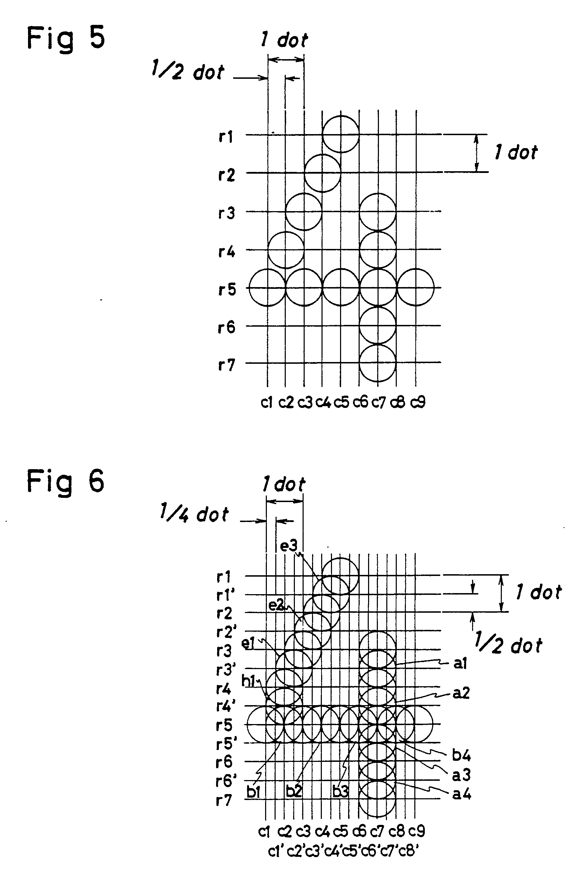

The essential difference between the GB—A—2 033 844 and the present invention is that the invention does not require storage of two distinct dot patterns, since in the invention the second matrix pattern is generated from the stored basic dot matrix pattern. As disclosed in the GB— reference, only gaps in a diagonal direction between dots are filled by the second pattern, whereas in the present invention, the second pattern contains interpolation dots to fill any gaps between the dots of the basic, stored pattern. It will therefore be appreciated that the memory capacity required for the system of the present invention is considerably less than for a system such as proposed in the GB— reference. Moreover, the interpolation dots can be used to smooth out irregularities in the outline of the basic dot pattern rather than merely to fill in gaps of the type as shown in the "X" of Figure 5 of GB—A—2 033 844.

Thus, the claimed method is advantageous in that a high-grade printing pattern can be obtained with a simple apparatus without increasing the number of wires of a printing head.

A further advantage is that the required memory capacity is reduced to where printing of two separately stored patterns is carried out.

The invention also relates to an apparatus for carrying out the above-defined method. Some other prior art methods and methods in accordance with the invention will now be described, by way of example only, with reference to the accompanying diagrammatic drawing in which:

Fig. 1—(I) shows a basic dot pattern according to the conventional technique;

Fig. 1—(II) shows a high-grade printing pattern according to the conventional technique;

Fig. 1—(III) shows a high-grade printing pattern according to the conventional technique;

Figs. 2—(I) and 2—(II) show two different printing patterns according to the conventional technique;

Fig. 2—(III) shows the high-grade printing pattern according to the conventional technique;

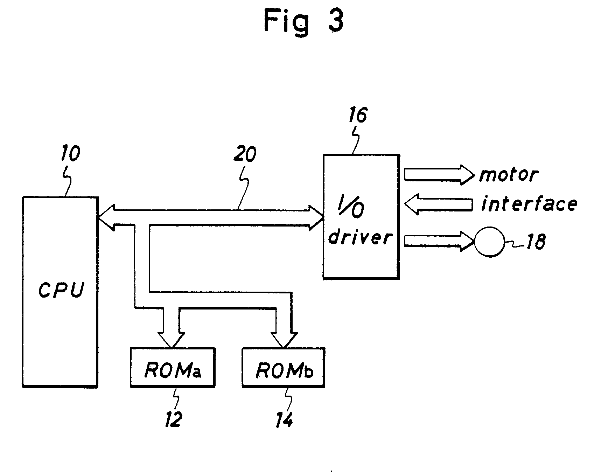

Fig. 3 is a block diagram illustrating the structure of an apparatus for carrying out the method of the present invention;

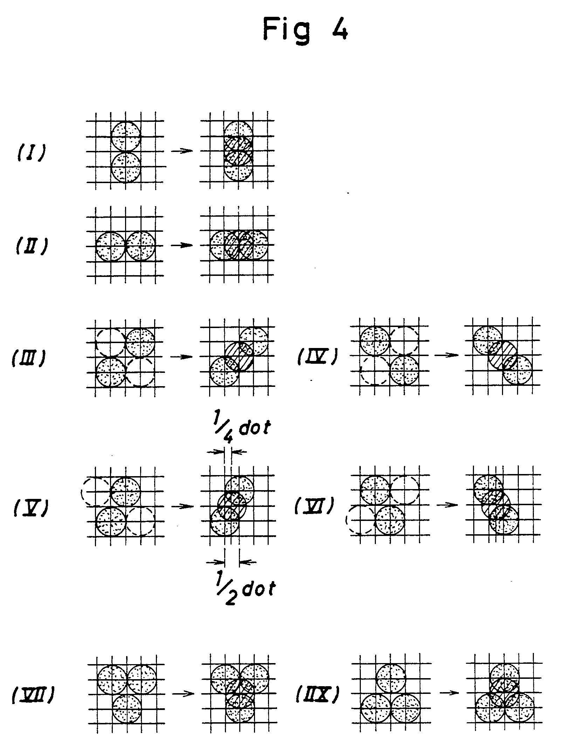

Figs. 4—(I) through 4—(IIX) are diagrams showing the conversion processing of various basic patterns according to algorithms;

Fig. 5 is a diagram showing the basic pattern;

Fig. 6 is a diagram showing the algorithm conversion processing;

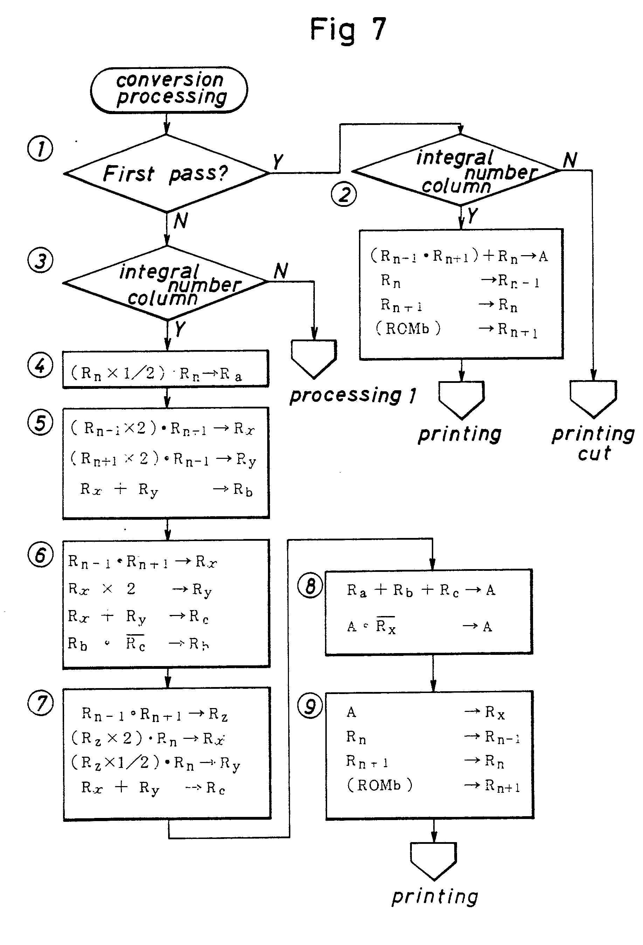

Fig. 7 is a flow chart of the conversion processing using integer columns;

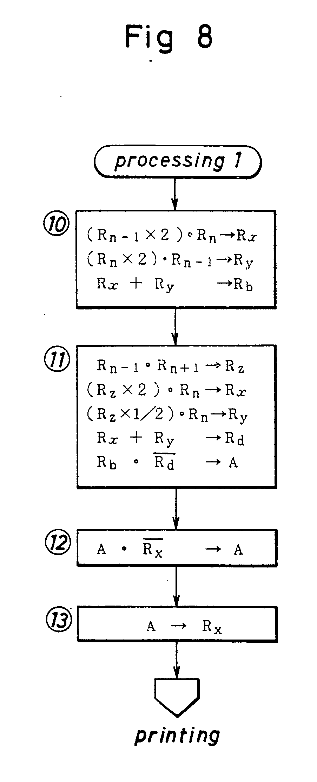

Fig. 8 is a flow chart of the conversion processing using columns other than integer columns;

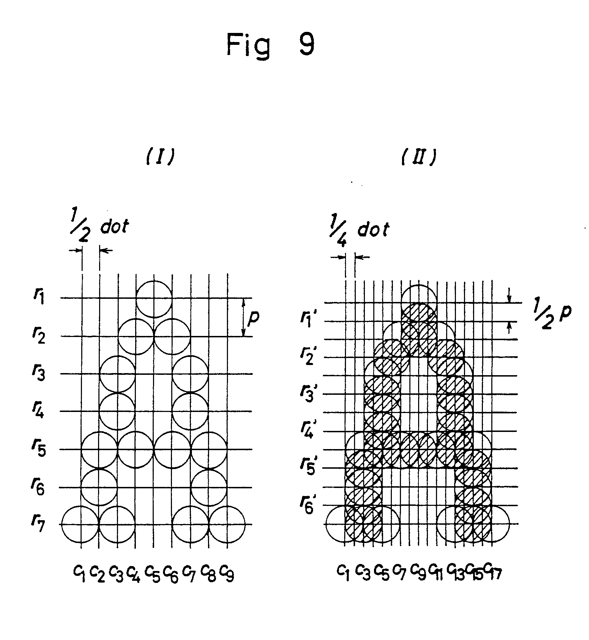

Fig. 9—(I) shows a basic letter pattern used when the repeated driving timing of a printing head is 1/2 dot;

Fig. 9—(II) shows the high-grade printing pattern by the conversion algorithm according to a first embodiment;

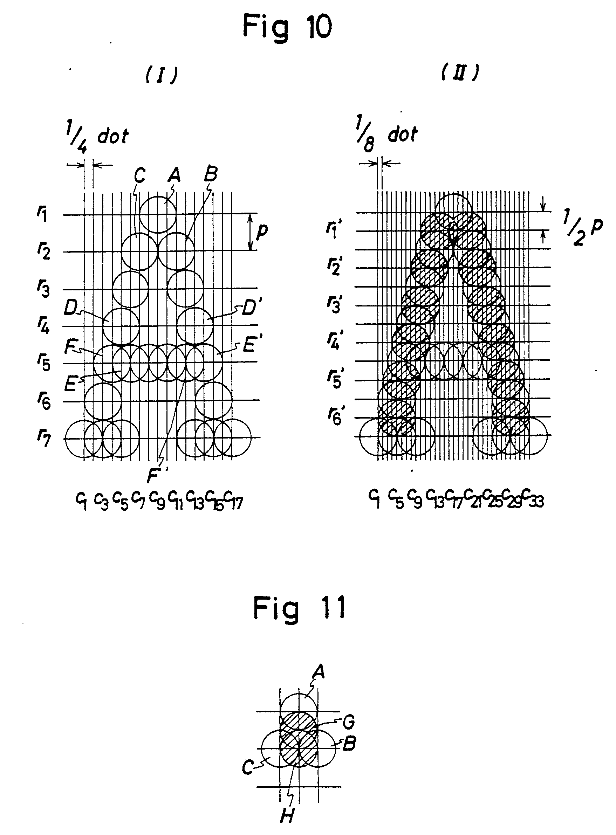

Fig. 10 shows the basic letter pattern used when the repeated driving timing of the printing head is 1/4 dot;

Fig. 10—(II) shows the high-grade printing pattern; .

Fig. 11 is a diagram illustrating the defect of the conversion algorithm of the first embodiment;

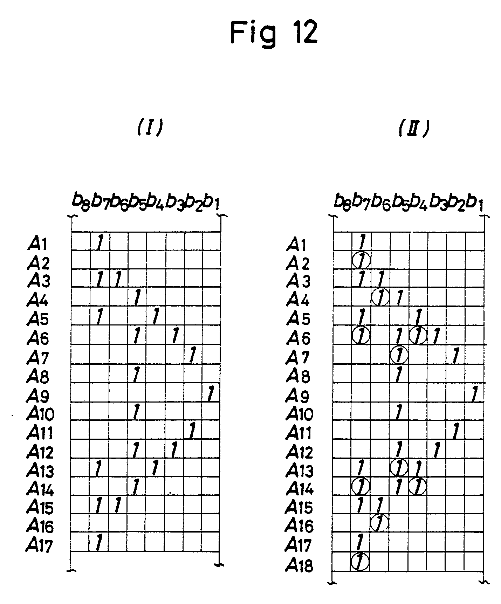

Fig. 12—(I) is a diagram showing the contents of basic dot data stored in the letter pattern storage memory;

Fig. 12—(II) is a diagram showing the contents of stored basic dot data and auxiliary data;

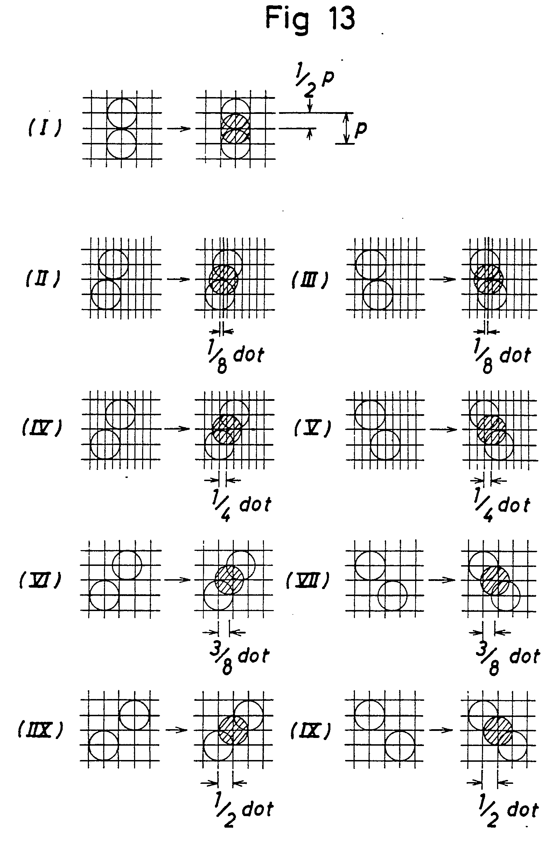

Figs. 13—(I) through 13—(IX) are diagrams illustrating the conversion algorithm according to a second embodiment;

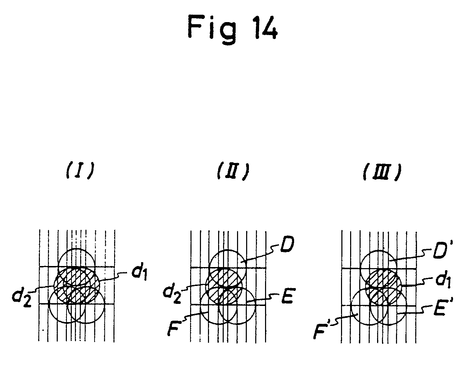

Figs. 14—(I) through 14—(III) are diagrams illustrating insertion of dots between dots; and

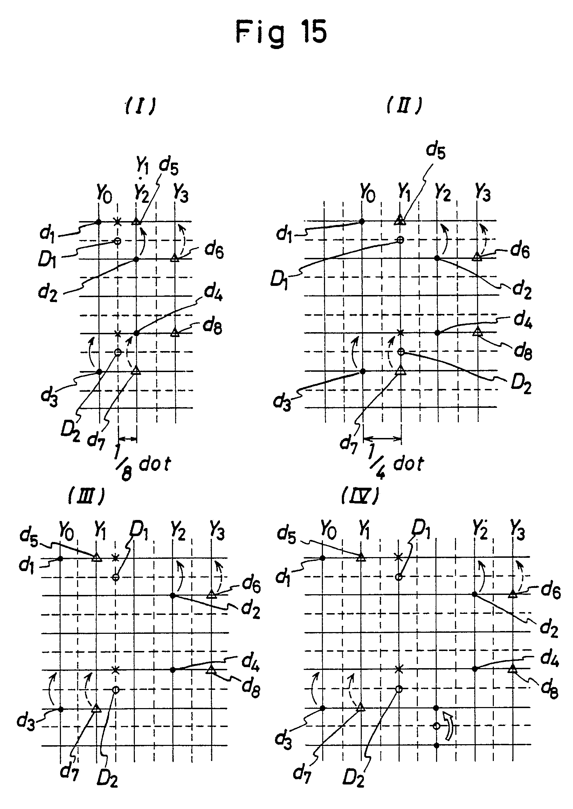

Figs. 15—(I) through 15—(IV) are diagrams illustrating the operation of inserting dots between dots.

Fig. 3 is a block diagram illustrating structure of an apparatus for carrying out the method of the present invention. Reference numeral 10 represents a microprocessor (hereinafter referred to as "CPU") for controlling a printer, and reference numeral 12 represents a read-only memory (hereinafter referred to as "ROMa") for storing a program therein. Reference numeral 14 represents ‘a read-only memory (hereinafter referred to as "ROMb") for storing a dot pattern of letters or symbols therein and reference numeral 16 represents an I/O driver driven by instructions from CPU 10. A printing head 18 is connected to the I/O driver 16. An LF motor (not shown) for effecting line shifting in a printing paper, a spacing SP motor (not shown) for moving the printing head 18 in the printing direction and an interface portion (not shown) for taking in printing data are connected to the I/O driver 16. The respective parts are connected to one another through bus lines 20.

In the printing operation by the apparatus having the above-mentioned circuit structure, CPU 10 receives control data and printing data from the interface according to the program stored in ROMa 12. On receipt of the printing data, a letter dot pattern is read out from ROMb 14 by using the received data as an address. When the control data indicates high-grade printing, the letter dot pattern read out from ROMb 14 is edited to a conversion algorithm and printing is carried out based on the edited data.

The conversion alogrithm for attaining a high-grade printing will now be described with reference to Fig. 4.

Figs. 4—(I) through 4—(IIX) show algorithmic conversion of various basic patterns. Dot indicates data of the dot read out from ROMb 14, indicates the absence of data read out from ROMb 14 on the corresponding bit, and indicates data of the dot to be interpolated.

An example of printing of numeral 4 according to this conversion alogrithm is illustrated in Figs. 5 and 6.

Fig. 5 shows a basic pattern which is read out from ROMb 14. Incidentally, the basic pattern is a letter pattern consisting of 7 vertical rows ($r_1$ through $r_7$) and 9 horizontal columns ($c_1$ through $c_9$).

Fig. 6 shows a printing pattern formed by printing a second pattern edited according to the conversion algorithm shown in Fig. 4 on the basic pattern shown in Fig. 5. In Fig. 6 a1 through a4 indicate interpolated dots according to the conversion shown in Fig. 4—(I), b1 through b4 indicate interpolated dots according to the conversion shown in Fig. 4—(II), e1 through e3 indicate interpolated dots according to the conversion shown in Fig. 4—(V), and h1 indicates an interpolated dot according to the conversion shown in Fig. 4—(IIX).

Printing of this numeral 4 is performed by the printing head 18 shown in Fig. 3. This printing head 18 comprises seven wires, and at the first spacing (one pass), dots of rows $r_1$ through $r_7$ shown in Fig. 6 are printed, and a printing paper is shifted upward by 1/2 dot or the printing head 18 is shifted downward by 1/2 dot. At the second spacing, dots $r_1'$ through $r_6'$ shown in Fig. 6 are printed to effect high-grade printing as shown in Fig. 6. Printing for filling up gaps in the basic pattern is performed based on the interpolation data according to the conversion algorithm.

Formation of the interpolation data and the printing operation will now be described with reference to Figs. 7 and 8.

Fig. 7 is a flow chart illustrating the conversion processing using integer columns, and Fig. 8 is a flow chart illustrating the conversion processing using columns other than integer columns.

In the drawings, $c_1$ through $c_9$ shown in Fig. 6 are used as the integer columns, and $R_n$, $R_{n-1}$ and $R_{n+1}$ represent registers for storing printing data of the column to be printed, printing data of the preceding column and printing data of the next column, respectively. In case of the conversion processing using columns other than integer columns (columns $c_1'$ through $c_8'$ shown in Fig. 6), $R_n$, $R_{n-1}$ and $R_{n+1}$ represent registers for storing printing data of the column appearing 1/4 dot after the column to be printed, printing data of the column appearing 1/4 dot before the column to be printed and printing data of the column appearing 3/4 dot after the column to be printed respectively. Each of $R_a$ through $R_d$ and $R_x$ through $R_z$

represent a general-purpose register $R_x$ represents a register for storing printing data appearing 1/4 dot before the column to be printed, and A represents an accumulator. In each logical operation, "." indicates a logical product, "+" indicates a logical sum, "×2" represents 1-bit shift-up "−" indicates a complement, and "×1/2" indicates 1-bit shift-down. Reference numerals ① through ⑬ are step numbers.

Figs. 3, 4, 5 and 6 will be referred to according to need in the following explanation of the printing operation.

In the printing operation, the SP motor in Fig. 3 is driven to move the printing head 18 to a predetermined position, and a letter code to be printed is given to CPU 10 from the interface through the I/O driver.

CPU 10 reads out the printing data of the column to be printed and the next column from ROMb 14 and these data are stored in the registers $R_n$ and $R_{n+1}$. At this point, 0 is stored in the register $R_{n-1}$.

After this storing step, the conversion processing shown in Fig. 7 is started. At first, it is judged at the step ① whether or not it is the first pass. If it is judged that the pass is the first pass, the step ② is carried out and the interpolation shown in Fig. 4—(II) is carried out.

At this step ②, ROMb 14 reads out the subsequent printing data and stores it in the register $R_{n+1}$.

In this state, printing is started by giving the data of the accumulator A to the printing head 18. When printing of one integer column is completed, the printing operation is transferred to the subsequent integer column, and in this manner, the steps ① and ② are repeated to complete printing of one letter. This corresponds to printing of the rows $r_1$ through $r_7$ shown in Fig. 6. On completion of printing of one letter, CPU 10 receives the next letter code and the above steps are repeated. Thus, printing of one line is carried out. This corresponds to the state where printing of the rows $r_1$ through $r_7$ is conducted over one line.

After printing of the rows $r_1$ through $r_7$ over one line has been conducted in the above-mentioned manner, the printing paper is shifted upward by 1/2 dot or the printing head 18 is shifted downward by 1/2 dot, and the printing head 18 is returned to the position of the first letter to be printed on the new line and printing of the second pass is started.

At first, in the same manner as described above, the printing data are stored in the registers $R_n$, $R_{n-1}$ and $R_{n+1}$.

Since the pass is the second pass, the flow enters into the step ③ from the step ①. At the step ③, it is judged whether or not the column is an integer column, and when it is judged that the column is an integer column, the flow enters into the step ④.

At the step ④, the processing of forming the interpolation data shown in Fig. 4—(I) is carried out, and at the step ⑤, the processing of forming the interpolation data shown in Figs. 4—(III) and 4—(IV) is carried out. Only when there is no data on the bit in Figs. 4—(III), and 4—(IV), at the step ⑥, the interpolation data obtained at the step ⑤ is effectively processed. At the step ⑦, the processing for effecting the interpolation shown in Figs. 4—(VII) and 4—(IIX) is performed (the processing for interpolating a dot at the median when three dots form a triangle). At the step ⑧, the editing processing is carried out so that printing is not effected on the row where printing has been effected before 1/4 dot. The processing for peparing for printing of the next column is carried out at step ⑨.

The foregoing processing is one using integer columns, as shown in Fig. 7, and the conversion processing columns other than the integer columns, as shown in Fig. 8, is further carried out.

At the step ⑩ shown in Fig. 8, the processing for forming the interpolation data shown in Figs. 4—(V) and 4—(VI) is carried out. Only when there is no data on the bit in Figs. 4—(V) and 4—(VI), at the step ⑪, the processing for rendering the interpolation data obtained at the step ⑩ effective is carried out. The same editing processing as conducted at the step ⑧ shown in Fig. 7 is carried out at the step ⑫, and the preparatory processing as conducted at the step ⑨ shown in Fig. 7 is carried out at the step ⑬.

This printing of the second phase is accomplished by giving the data obtained by the editing processing conducted at the step ⑧ and the data of the accumulator A obtained at the step ⑫ to the printing head 18.

When printing of one column is completed, printing of the next column is started and step ③ and subsequent steps are repeated, until printing of one letter is completed. This operation corresponds to printing of the rows $r_1'$ through $r_6'$ shown in Fig. 6 or 9. When printing of one letter is thus completed, CPU 10 receives the letter code of the subsequent letter and the above-mentioned steps are repeated. In this manner, printing of one line is completed. This corresponds to the state where printing is effected over 1 line with respect to the rows $r_1'$ through $r_6'$ shown in Fig. 6 or 9. Printing of letters of this line according to the algorithmic conversion processing, that is, high-grade printing, is thus completed.

Then, one-line shifting is performed and the printing head 18 is returned to the printing-starting position, and printing on the next line is started.

In the foregoing embodiment, the conversion processing is carried out at a low printing speed of the printer. In the case where the printing speed of the printer is high, a buffer memory is connected to the bus line 20 shown in Fig. 3, and the editing processing is carried out before the printing operation to store printing data in the buffer memory. At the time of printing, the printing data is read out from the buffer memory and printing is then peformed. If this arrangement is adopted, the above-mentioned effects can similarly be attained even is the printing speed is high.

In the conversion processing of this case, the results of editing at the step ② shown in Fig. 7 and the results of editing at the steps ⑧ and ⑫ shown in Figs. 7 and 8 are separately stored in the buffer memory, and other procedures are the same as in the above-mentioned embodiment and the printing data of the first pass and the printing data of the second pass are read out from the separated areas of the buffer memory, respectively.

The foregoing embodiment has been described with reference to the dot matrix having 7 rows and 9 columns, but the dot matrix is not limited to this dot matrix. For example, it can be carried out on any basic dot matrix irrespective of the dot matrix structure and a dot pattern of high-grade printing can be obtained with a reduced memory capacity.

For example, the number of letters used for an ordinary printer is about 256 inclusive of alphabetic letters, numerical letters, symbols and *kana* letters. In the conventional system shown in Fig. 2, two dot patterns are necessary for every letter for high-grade printing. Accordingly, in the case of a 9-column structure, a memory of 4608 bytes ($= 256 \times 2 \times 9$) is necessary. By contrast, in the above system a conversion program of about 200 bytes is sufficient.

The present invention will now be described with reference to a second embodiment where the printing density is also doubled in the column direction, that is, printing is carried out at 1/2 dot intervals to further increase the printing grade. In this second embodiment, interpolation in the row direction need not be computed. This embodiment overcomes a defect of the first embodiment illustrated in Figure 11 which shows how two interpolation dots G and H are generated by the algorithm where the character data has 3 dots A, B, C in a triangular configuration.

The data of the basic pattern and the auxiliary data of dots to be interpolated are stored in the ROMb 14 shown in Fig. 3, as shown in Fig. 12—(II) (pattern A is illustrated as an example). For camparison's sake, the case where only the data of the basic pattern is stored is shown in Fig. 12—(I). Fig. 12 shows the memory space, $A_1$, $A_2$, ... $A_{17}$ represent addresses and $b_1$, $b_2$ ... $b_8$ represents bits of each address. For convenience's sake, $A_1$, $A_2$ ... $A_{17}$ are made to correspond to columns $C_1$, $C_2$ ... $C_{17}$ shown in Fig. 10—(I) and the bits $b_1$, $b_2$ ... $b_7$ are made to correspond to rows $r_1$, $r_2$ ... $r_7$. The memory space has a 8-bit width, though the width of the memory space is not limited to this width.

In Fig. 12, "1" in the grid is data for the basic pattern, which corresponds to the encircled data in Fig. 10—(I). The blank grid corresponds to the other data not printed, and "①" indicates auxiliary data.

Fig. 13 diagrammatically shows the conversion algorithm of the present embodiment.

The manner of using the auxiliary data in order to inhibit the interpolation of dots will now be described. For example, with reference to dots D, E, F, D', E' and F' shown in Fig. 10—(I), according to the conversion algorithms of Figs. 13—(II) and 13—(III), dots $d_1$ and $d_2$ are interpolated as shown in Fig. 14—(I). Needless to say, interpolation of dot $d_2$ shown in Fig. 14—(II) is most preferred for dots D, E and F shown in Fig. 10—(I) and interpolation of dot $d_1$ shown in Fig. 14—(III) is most preferred for dots D', E' and F'.

Accordingly, in the present embodiment, the following point is noted and utilized. As shown in Fig. 10—(I), one letter is horizontally divided into segments of 1/4 dot, but the interval between two continuous dots in the horizontal direction is 1/2 dot and there is no continuity of the interval of 1/4 dot. The reason is that since the interval of 1/2 dot is sufficient for the printing grade of the horizontal direction and the printing speed of the printer is limited by the repeated driving speed of the printing head, the dot interval in the horizontal direction cannot be so narrowed for increasing the printing speed.

If this point is utilized, the auxiliary data ① for determining whether or not the interpolation dot should be added can be added relatively to the printing data as shown in Fig. 12—(II). Addition of the auxiliary data ① may be accomplished by adding data "1" of the subsequent dot positions of the same row to the positions of two basic dots where interpolation is not desired.

For example, referring to Fig. 14—(II) where interpolation is not desired between dots D and E, auxiliary data 1 is added to the position of $(A_6, b_4)$ subsequent to the position of address $A_5$ and $bit_4$ corresponding to dot D [hereinafter referred to as "$(A_5, b_4)$"; similar abbreviations will be used hereinafter] and the position $(A_7, b_5)$ subsequent to the position of $(A_6, b_5)$ corresponding to dot E. Similarly, in Fig. 14—(III), auxiliary data ① is added to the position of $(A_{14}, b_4)$ and the position of $(A_{13}, b_5)$. In this case, the reading direction is of $A_1 \rightarrow A_{17}$.

When the letter pattern data stored as shown in Fig. 12—(II) is read out, the first read data "1" in the same row is used as the printing data, and when data "1" continuously appears on the next address, this data "1" is not used as the printing data but as the auxiliary data. When data "1" continuously appears on the next address again, this data is used as the printing data. This is repeated in the following.

When pattern "A" shown in Fig. 10—(II) is printed by using the letter pattern data shown in Fig. 12—(II), the repeated driver timing of the printing head is set at 1/8 dot but the interval between two continuous dots in the lateral direction is 1/2 dot and printing is effected on the rows

$r_1$, $r_2$ ... $r_7$ of the columns $C_1$, $C_3$, $C_5$, ... $C_{33}$.

The following method is adopted for forming the printing data for the above printing operation. The data of address $A_1$ [hereinafter referred to as "$(A_1)$"; similar abbreviations will be used with reference to $A_2$, $A_3$ ...] is directly used in the column $C_1$, and with respect to the column $C_3$ (stored at address $A_2$), logical product $(A_1)\cdot(A_2)$ of the preceding printing data $(A_1)$ and the present printing data $(A_2)$ is computed and by inversion $\overline{(A_1)\cdot(A_2)}$ of this logical operation, the position of the auxiliary data-stored bit (the data at this position is logic "0") is known. Furthermore, the logic product $\overline{(A_1)\cdot(A_2)}\cdot(A_2)$ of the obtained result and the present printing data $(A_2)$ is computed to obtain the data to be practically printed. With respect to the colums $C_5$ (stored at address $A_3$), the data to be practically printed, that is $[\overline{(A_1)\cdot(A_2)}\cdot(A_2)]\cdot(A_3)\cdot(A_3)$, is similarly determined from the preceding printing data $[\overline{(A_1)\cdot(A_2)}\cdot(A_2)]$ and the present printing data $(A_3)$. With respect to the columns $C_7$, $C_9$, ... $C_{33}$, data to be practically printed will similarly be obtained.

With respect to each of the columns $C_2$, $C_4$, $C_6$, $C_8$, ... $C_{32}$, since printing is not performed, the printing data is logic "0".

The pattern to be printed in this case is as shown in Fig. 10—(I) and the interval between two continuous dots is 1/2 dot or more, as pointed out hereinbefore.

When printing is conducted on the rows $r_1'$, $r_2'$ ... $r_6'$ of the columns $C_1$, $C_2$, $C_3$, ... $C_{33}$, the printing paper is shifted upward by 1/2 pitch (1/2P) and interpolation dots are printed while setting the driving timing of the printing head at 1/8 dot.

The following method is adopted for forming the interpolation data for the above printing operation. Referring to Fig. 15, vertical solid lines represent odd number columns $C_1$, $C_3$, ... $C_{33}$, vertical dotted lines represent even number columns $C_2$, $C_4$, ... $C_{32}$, horizontal solid lines represent rows $r_1$, $r_2$, ... $r_7$, and horizontal dotted lines represent rows $r_1'$, $r_2'$, ... $r_6'$. Incidentally, "." corresponds to data "1" shown in Fig. 12—(II), "△" corresponds to auxiliary data ① shown in Fig. 12—(II) and "o" represents an interpolation dot. The column where left "." in Fig. 15 is carried, that is, the column where printing has been completed, is designated as Yo, and the printing data of the column Yo is designated as Ro. The column where right "." is carried, that is, the column where printing is going to start, is designated as $Y_2$ and the printing data of the column $Y_2$ is designated as $R_2$. The column where the auxiliary data (left "△") corresponding to the printing data of the column $Y_0$ is carried is designated as $Y_1$, and the printing data of the column $Y_1$ is designated as $R_1$. The column where the auxiliary data (right "△") corresponding to the printing data of the column $Y_2$ is carried is designated as $Y_3$, and the printing data of the column $Y_3$ is designated as $R_3$.

As is apparent from the drawings, the columns $Y_1$, $Y_2$, and $Y_3$ are located at the odd number column positions shown in Fig. 10(II), and the printing data and auxiliary data are stored in the letter pattern-storing memory as shown in Fig. 12(II).

Formation of the interpolation dot data is accomplished according to the following procedures.

(i) Simulation data (upper mark "x") of dot $D_1$ to be interpolated between dots $d_1$ and $d_2$ is determined.

(ii) Simulation data (lower mark "x") of dot $D_2$ to be interpolated between dots $d_3$ and $d_4$ is determined.

(iii) The data for inhibiting the interpolation by the interpolation dot $D_1$ is determined.

(iv) The data for inhibiting the interpolation by the interpolation dot $D_2$ is determined.

(v) The interpolation shown in Fig. 13—(I) is effected only with respect to the odd number columns $C_1$, $C_3$, ... $C_{33}$.

In the method (i) the following logical operation is carried out:

$$R_0 \cdot R_2' \qquad (1)$$

In the formula (1), $R_2'$ is a value obtained by shifting $R_2$ by 1 bit in the direction of a solid line arrow and mark "." indicates a logical product.

If there is present the interpolation dot $D_1$ (there are present dots $d_1$ and $d_2$), the value of the formula (1) becomes "1" at the bit position of the corresponding upper mark "X".

When the data of the formula (1) is practically printed on the printing paper, since the paper is shifted upward by 1/2 pitch, the interpolation dot $D_1$ shown in Fig. 15 is printed.

In the method (ii), the following logical operation is carried out:

$$R_0' \cdot R_2 \qquad (2)$$

In the formula (2), $R_0'$ is a value obtained by shifting $R_0$ by 1 bit in the direction of a solid line arrow.

If there is present the interpolation dot $D_2$ (there are present dots $d_3$ and $d_4$), the value of the formula (2) becomes "1" at the bit position of the corresponding lower mark "x".

In the method (iii), the following logical operation is carried out:

$$(R_0 \cdot R_1) \cdot (R_2 \cdot R_3)' \qquad (3)$$

In the formula (3), $(R_0 \cdot R_1)$ and $(R_2 \cdot R_3)$ are formulas for determining the auxiliary data, and data "1" is auxiliary data (the printing data is not continuous between the columns $Y_0$ and $Y_1$ or between the columns $Y_2$ and $Y_3$). Furthermore, $(R_2 \cdot R_3)'$ is a value obtained by shifting the result $(R_2 \cdot R_3)$ of the logical operation by 1 bit in the direction of a dotted line arrow.

If there is present the data for inhibiting the interpolation by the interpolation dot $D_1$ (there are present the auxiliary data $d_5$ and $d_6$), the value of the formula (3) becomes "1" at the corresponding bit position.

In the method (iv), the following logical operation is carried out:

$$(R_0 \cdot R_1)' \cdot (R_2 \cdot R_3) \qquad (4)$$

In the formula (4), $(R_0 \cdot R_1)'$ is a value obtained by shifting the result $(R_0 \cdot R_1)$ by 1 bit in the direction of a dotted line arrow.

If there is present the data for inhibiting the interpolation by the interpolation dot $D_2$ (there are present the auxiliary data $d_7$ and $D_8$), the value of the formula (4) becomes "1" at the corresponding bit position.

In the method (v), the following logical operation is carried out while the basic dot data printed at the preceding step (the data of the odd number column) is designated as $R_5$ and the data to be presently printed is designated as $R_6$:

$$(R_6 \cdot \overline{R_5 \cdot R_6}) \cdot (R_6 \cdot \overline{R_5 \cdot R_6})' \qquad (5)$$

In the formula (5), $(R_6 \cdot \overline{R_5 \cdot R_6})$ indicates the logical operation of eliminating the auxiliary data from the present printing data, and the operator "−" indicates the inversion and the mark "'" represents the 1-bit shifting in the direction of the hollow outlined arrow.

When the data of the even number column is printed, the data of the interpolation dot to be practically printed is determined from the stipulation data obtained in the methods (i) and (ii) and the interpolation-inhibiting data obtained in the methods (iii) and (iv) according to the following logical operation:

$$\underbrace{(R_0 \cdot R_2{'}}_{(1)} + \underbrace{R_0{'} \cdot R_2)}_{(2)} \qquad (6)$$

$$\overline{\cdot \underbrace{(R_0 \cdot R_1) \cdot (R_2 \cdot R_3)}_{(3)}{'} + \underbrace{(R_0 \cdot R_1){'} \cdot (R_2 \cdot R_3)}_{(4)}}$$

In the above logical formula "+" represents the logical sum.

When the data of the odd number column is printed, the data to be printed is determined from the above formula (5) and (6) as follows:

$$[\text{data of formula (6)}] =$$
$$(R_6 \cdot \underline{R_5 \cdot R_6}) \cdot (R_6 \cdot)' \qquad (7)$$

The dot to be printed at this time is dot

in Fig. 10—(II), and the interval between two continuous dots in the horizontal direction is 1/2 dot or more.

As is apparent from the foregoing description, a second matrix pattern is generated from a basic dot matrix pattern by the algorithmic conversion processing, and both the dot matrix patterns are synthesized and edited so that gaps of the basic dot matrix pattern are filled up, whereby the following effects are attained.

In the first place, high-grade printing can be accomplished more assuredly than in the conventional system where printing is conducted two times while slightly shifting one pattern.

In the second place, the memory capacity can be reduced, as compared with the conventional system where printing is carried out while slightly shifting different patterns.

In the third place, the described system is advantageous over the conventional system where the wire number is increased, because the structure of the apparatus can be simplified and the cost of the apparatus can be reduced.

In the fourth place, by storing the basic dot data and the auxiliary data for inhibition of insertion of the interpolation dot in the letter pattern-storing memory, the capacity of the letter pattern-storing memory for high-grade printing can be reduced, and the logical operation for determining the interpolation dot is simplified and the printing grade is further enhanced.

**Claims**

1. A printing method for printing letters or symbols by aggregated dots with a printhead of a dot printer, by printing a basic dot matrix pattern in one pass of the printhead and printing a second matrix pattern in a second pass of the printhead, characterised in that the second matrix pattern is generated from the basic dot matrix pattern by an algorithm so that any gaps between dots in the basic dot matrix pattern are filled up by interpolation dots of the second dot matrix pattern.

2. A printing method in a dot printer according to claim 1, wherein basic dot data and auxiliary data for inhibition of insertion of certain interpolation dots by said algorithm are stored in a memory for storing the basic dot matrix pattern therein.

3. Printing apparatus for printing characters as arrangements of dots in accordance with the method of claim 1 or 2, comprising a memory (14b) for storing basic dot matrix patterns for a plurality of selectable characters, and means (10, 16, 18) for printing dot patterns of selected characters, characterised in that the apparatus further comprises means for processing the stored dot pattern to interpolate additional dots between those of the stored pattern by an algorithm so that any gaps between dots in said stored dot pattern are filled up by said additional interpolation dots to produce a higher grade print quality, and for feeding data relating to the stored pattern and the interpolation dots to said printing means (10, 16, 18).

**Patentansprüche**

1. Druckverfahren zum Drucken von Buchstaben oder Symbolen durch angehäufte Punkte mit einem Druckerkopf eines Punktdruckers durch Drucken eines Grundpunkt-Matrixmusters in einem Durchgang des Druckerkopfes und Drucken eines zweiten Matrixmusters in einem zweiten Durchgang des Druckerkopfes, dadurch gekennzeichnet, daß das zweite Matrixmuster von dem Grunkpunkt-Matrixmuster durch einen Algorithmus erzeugt wird, derart, daß jedwede Zwischenräume zwischen Punkten in dem Grundpunkt-Matrixmuster durch Interpolationspunkte des zweiten Punkt-Matrixmusters ausgefüllt werden.

2. Druckverfahren in einem Punktdrucker nach Anspruch 1, in dem Grundpunktdaten und Hilfsdaten zur Blockierung des Einsatzes von bestimmten Interpolationspunkten durch den Algorithmus in einem Speicher zur Speicherung des Grundpunkt-Matrixmusters gespeichert sind.

3. Druckeinrichtung zum Drucken von Zeichen als Punktanordnungen nach dem Verfahren der Ansprüche 1 oder 2 mit einem Speicher (14b) zur Speicherung von Grundpunkt-Matrixmustern für eine Mehrzahl auswählbarer Zeichen und einer Einrichtung (10, 16, 18) zum Drucken von Punktmustern augsewählter Zeichen, dadurch gekennzeichnet, daß die Einrichtung außerdem aufweist Einrichtungen zur Verarbeitung des gespeicherten Punktmusters, um zusätzliche Punkte zwischen jenen des gespeicherten Musters durch einen Algorithmus derart, daß jedwede Zwischenräume zwischen Punkten in dem gespeicherten Punktmuster durch die zusätzlichen Interpolationspunkte ausgefüllt werden, zu interpolieren, um eine hochwertigere Druckqualität zu erzeugen, und zur Zuführung von Daten, die das gespeicherte Muster und die Interpolationspunkte betreffen, zu der Druckeinrichtung (10, 16, 18).

## Revendications

1. Un procédé d'impression pour imprimer des lettres ou des symboles par des points combinés, avec une tête d'impression d'une imprimante par points, par l'impression d'une configuration de matrice de points de base au cours d'une passe de la tête d'impression, et l'impression d'une seconde configuration de matrice au cours d'une seconde passe de la tête d'impression, caractérisé en ce qu'on génère la seconde configuration de matrice à partir de la configuration de matrice de points de base, par un algorithme tel que tous les espaces entre des points dans la configuration de matrice de points de base soient remplis par des points d'interpolation de la seconde configuration de matrice de points.

2. Un procédé d'impression pour une imprimante par points selon la revendication 1, dans lequel des données de points de base et des données auxiliaires destinées à empêcher l'insertion de certains points d'interpolation par l'algorithme, sont enregistrées dans une mémoire prévue pour enregistrer la configuration de matrice de points de base.

3. Appareil d'impression pour l'impression de caractères sous la forme d'associations de points, conformément au procédé de la revendication 1 ou 2, comprenant une mémoire (14b) prévue pour enregistrer des configurations de matrice de points de base pour un ensemble de caractères pouvant être sélectionnés, et des moyens (10, 16, 18) pour imprimer des configurations de points de caractères sélectionnés, caractérisé en ce que cet appareil comprend en outre des moyens destinés à traiter la configuration de points enregistrée, pour interpoler des points supplémentaires entre ceux de la configuration enregistrée, au moyen d'un algorithme, de façon à remplir avec les points d'interpolation supplémentaires tous les espaces qui existent entre des points dans la configuration de points enregistrée, dans le but d'obtenir une meilleure qualité d'impression, et destinés à fournir aux moyens d'impression (10, 16, 18) des données concernant la configuration enregistrée et les points d'interpolation.

# Fig 1

(I)          (II)          (III)

# Fig 2

(I)          (II)          (III)

# Fig 3

# Fig 4

(I)

(II)

(III)                    (IV)

1/4 dot

(V)                     (VI)

1/2 dot

(VII)                    (IIX)

## Fig 5

## Fig 6

0 132 415

# Fig 7

conversion processing

① First pass?

② integral number column

③ integral number column

④ $(R_n \times 1/2) \cdot R_n \rightarrow R_a$

⑤
$(R_{n-1} \times 2) \cdot R_{n-1} \rightarrow R_x$
$(R_{n+1} \times 2) \cdot R_{n-1} \rightarrow R_y$
$R_x + R_y \rightarrow R_b$

⑥
$R_{n-1} \cdot R_{n+1} \rightarrow R_x$
$R_x \times 2 \rightarrow R_y$
$R_x + R_y \rightarrow R_c$
$R_b \cdot \overline{R_c} \rightarrow R_b$

⑦
$R_{n-1} \cdot R_{n+1} \rightarrow R_z$
$(R_z \times 2) \cdot R_n \rightarrow R_x$
$(R_z \times 1/2) \cdot R_n \rightarrow R_y$
$R_x + R_y \rightarrow R_c$

For block ②:
$(R_{n-1} \cdot R_{n+1}) + R_n \rightarrow A$
$R_n \rightarrow R_{n-1}$
$R_{n+1} \rightarrow R_n$
$(ROMb) \rightarrow R_{n+1}$

⑧
$R_a + R_b + R_c \rightarrow A$
$A \cdot \overline{R_x} \rightarrow A$

⑨
$A \rightarrow R_x$
$R_n \rightarrow R_{n-1}$
$R_{n+1} \rightarrow R_n$
$(ROMb) \rightarrow R_{n+1}$

processing 1

printing

printing cut

printing

5

# Fig 8

```
          ╭─────────────────╮
          │  processing 1   │
          ╰─────────────────╯
                  │
                  ▼
   ⑩  ┌──────────────────────────┐
      │ ( R_{n-1} × 2 )∘R_n →R_x  │
      │ ( R_n × 2 )・R_{n-1}→R_y  │
      │   R_x + R_y      →R_b     │
      └──────────────────────────┘
                  │
                  ▼
   ⑪  ┌──────────────────────────┐
      │  R_{n-1}∘R_{n+1} →R_z     │
      │ ( R_z × 2 )∘R_n →R_x      │
      │ ( R_z ×1/2 )∘R_n→R_y      │
      │   R_x + R_y     →R_d      │
      │   R_b ・ R̄_d    → A       │
      └──────────────────────────┘
                  │
                  ▼
   ⑫  ┌──────────────────────────┐
      │  A ・ R̄_x        → A      │
      └──────────────────────────┘
                  │
                  ▼
   ⑬  ┌──────────────────────────┐
      │       A  →  R_x           │
      └──────────────────────────┘
                  │
                  ▼
               ╲       ╱
                ╲     ╱
                 ╲   ╱
                  ╲ ╱
              printing
```

# Fig 9

(I)

(II)

$\frac{1}{2}$ dot

$\frac{1}{4}$ dot

$r_1$ $r_2$ $r_3$ $r_4$ $r_5$ $r_6$ $r_7$

$p$

$c_1$ $c_2$ $c_3$ $c_4$ $c_5$ $c_6$ $c_7$ $c_8$ $c_9$

$r_1'$ $r_2'$ $r_3'$ $r_4'$ $r_5'$ $r_6'$

$\frac{1}{2}p$

$c_1$ $c_3$ $c_5$ $c_7$ $c_9$ $c_{11}$ $c_{13}$ $c_{15}$ $c_{17}$

# Fig 10

( I )          ( II )

# Fig 11

# Fig 12

# Fig 13

# Fig 14

(I)          (II)          (III)

# Fig 15